# EUROPEAN PATENT APPLICATION

(11) **EP 1 800 718 A1**
(43) Date of publication of application: **27.06.2007**
(21) Application number: 05781968.2
(22) Date of filing: 09.09.2005
(51) Int. Cl.: A63F 13/00

(54) **GAME PROGRAM, GAME DEVICE, AND GAME METHOD**

(30) Priority: 21.09.2004 JP 2004273574
(71) Applicant: Konami Digital Entertainment Co., Ltd., Tokyo 106-6114 (JP)
(72) Inventor: FUJIOKA, Kenji c/o Konami Dig. Enter. Co., Ltd., Tokyo 1066114 (JP); NISHIKAWA, Naoki c/o Konami Dig. Enter. Co., Ltd., Tokyo 1066114 (JP)
(74) Representative: Driver, Virginia Rozanne
(86) International application number: PCT/JP2005/016623
(87) International publication number: WO 2006/033243

(57) **Abstract**

With a game implemented by this program, a first character 74c (74b) positioned in a first position and a second character 74d (74c) positioned in a second position will be displayed on a monitor. In addition, a moving character 72a that can be moved between the first character 74c (74b) and the second character 74d (74c) will be displayed on the monitor. Then, if the moving character 72a is selected by placing a command means into contact with the moving character 72a, the moving character 72a will be moved in the direction of the first character 74c (74b) or the second character 74d (74c) in response to the number of times that the command means has been placed into contact with the moving character 72a.

## Description

### Technical field

The present invention relates to a game program, and in particular to a game program for causing a computer to implement a game that displays a plurality of characters on a touch panel type of monitor. In addition, the present invention relates to a game device and a game method that is actualized by this game program.

### Background art

Various video games have been proposed in the past. Various video games now allow one to issue various commands to a character displayed on a monitor by operating an input unit that is independent of a game unit, e.g., various input buttons on a controller, or by operating various input buttons that are integrally provided on the game unit. For example, a standard game device has a monitor, a game unit that is separate from the monitor, and a controller that is separate from the game unit. A plurality of input buttons are arranged on the controller. In addition, a portable game device has a game unit, a liquid crystal monitor arranged in the approximate central portion of the game unit, and a plurality of input buttons that are arranged on both sides of the liquid crystal monitor. With this type of game device, various commands can be issued to a character displayed on the monitor by operating at least one of the plurality of input buttons.

Thus, one known video game in which commands to a character are performed from input buttons includes a competitive video game, e.g., a baseball game, in which athlete characters are displayed on a monitor and a competition takes place. In this baseball game, when a player is to cause a runner to run to a base, the player can cause a runner character to sequentially move in a desired direction, e.g., from first base to second base, from second base to third base, and from third base to home base, by selectively pushing up/down and left/right directional command buttons that command the base running direction and a button corresponding to a running sequence command. In addition, the player can cause a runner character to move in the reverse direction, e.g., from second base to first base, from third base to second base, and from home base to third base, by selectively pushing the up/down and left/right directional command buttons that command the base running direction and a button corresponding to a reverse running command.

### Disclosure of the invention

With a conventional baseball game, if the up/down and left/right directional command buttons that command the base running direction are selectively pushed when a player causes a runner to run to a base, the base running direction of the runner character will be selected. Then, if the button corresponding to the running sequence command or the reverse running command is pushed, the runner character will begin to run in the base running direction that was selected. For example, if the player pushes the up directional command button corresponding to second base and then pushes the running sequence command button, the runner character can be caused to proceed from first base to second base. At this point, if the player pushes the right directional command button corresponding to first base and then pushes the reverse running command button, the runner character can be caused to retreat from second base back to first base.

Thus, if the runner character is to be caused to run to a base, the player must confirm the play situation on the monitor while blindly touching the directional command buttons corresponding to second base and first base. In addition, when causing the runner character to run to a base and retreat from a base, the player must selectively push the base running command buttons and the base retreat command button. In particular, because the player must execute these operations only during play, the player may push a directional command button that differs from the desired button, or mistakenly push the base running command buttons and the base retreat command button.

An object of the present invention is to make it possible to correctly execute a command used to move a character.

A game program according to claim 1 is a program for implementing the following functions on a computer capable of implementing a game in which a plurality of characters are displayed on a touch panel type of monitor.

(1) A character display function that will display a first character positioned at a first position and a second character positioned at a second position on the monitor.

(2) A moving character display function that will display on the monitor a moving character that is movable between the first character and the second character.

(3) A moving character selection function that will select the moving character when a command means is placed into contact with the moving character.

(4) A character movement function that will move the moving character to one of the first character and the second character in response to the number of times the command means is placed into contact with the moving character.

With a game implemented by this program, a first character positioned in a first position and a second character positioned in a second position will be displayed on a monitor with the character display function. A moving character that is movable between the first character and the second character will be displayed on the monitor with the moving character display function. The moving character will be selected with the moving character selection function when the command means is placed into contact with the moving character. The moving character will be moved with the character movement function to one of the first character and the second character in response to the number of times the command means is placed into contact with the moving character.

With this game program, the first character positioned at the first position and the second character positioned at the second position will be displayed on the monitor, and the moving character movable between the first character and the second character will be displayed on the monitor. In this state, if the moving character is selected when the command means is placed into contact with the moving character, the moving character will move to one of the first character and the second character in response to the number of times the command means is placed into contact with the moving character.

For example, consider a case in which a baseball game is implemented on a touch panel type of monitor, and a player issues a base running command to a runner. In this case, with the program described above, a player can cause a runner character to run from first base to second base, for example, by placing the command means into contact with the runner character at first base. At this point, by again placing the command means into contact with the runner character while running to second base, the player can cause the runner character to retreat from second base back to first base. Thus, the player can cause the runner character to run to a base and retreat back to a base with a simple operation in which the command means is repeatedly placed into contact with the runner character. In this way, a player can accurately and easily execute commands that cause a runner character to move.

A game program according to claim 2 is the game program of claim 1, in which the character moving function will move the moving character to one of the first character and the second character when the command means is placed into contact with the moving character an odd number of times, and will move the moving character to the other of the first character and the second character when the command means is placed into contact with the moving character an even number of times.

Here, the moving character will be moved to one of the first character and the second character when the command means is placed into contact with the moving character an odd number of times. In addition, the moving character will be moved to the other of the first character and the second character when the command means is placed into contact with the moving character an even number of times. Because of this, with a baseball game for example, a player can cause a runner character to run from first base to second base, for example, by placing the command means into contact with the runner character at first base one time. At this point, by again placing the command means into contact with the runner character while running to second base, the player can cause the runner character to retreat from second base back to first base. Thus, a player can accurately and easily execute commands that cause the runner character to move.

A game program according to claim 3 is the game program of claims 1 or 2, in which the character movement function includes a function that will reverse the direction in which the moving character is moving each time the command means is placed into contact with the moving character during movement.

Here, the direction in which the moving character moves will be reversed each time the command means is placed into contact with the moving character during movement. Because of this, in a baseball game for example, if a player places the command means into contact with a runner character when the runner character is running from first base to second base, the moving runner character can be caused to retreat from second base to first base. In this way, a player can accurately and easily execute commands that cause a runner character to move.

A game device according to claim 4 is a game device that can implement a game in which a plurality of characters is displayed on a touch panel type of monitor. This game device comprises character display means, moving character display means, moving character selection means, and character moving means. The character display means will display a first character positioned at a first position and a second character positioned at a second position on a monitor. The moving character display means will display a moving character that is movable between the first character and the second character on the monitor. The moving character selection function will select the moving character when the command means is placed into contact with the moving character. The character movement function will move the moving character to one of the first character and the second character in response to the number of times the command means is placed into contact with the moving character.

A game method according to claim 5 is a game method that can implement a game in which a plurality of characters is displayed on a touch panel type of monitor. This game method comprises a character display step, a moving character display step, a moving character selection step, and a character moving step. The character display step will display a first character positioned at a first position and a second character positioned at a second position on a monitor. The moving character display step will display a moving character that is movable between the first character and the second character on the monitor. The moving character selection step will select the moving character when the command means is placed into contact with the moving character. The character movement means will move the moving character to one of the first character and the second character in response to the number of times the command means is placed into contact with the moving character.

### Brief description of the drawings

[Fig. 1] A external view of a portable game unit (an example of a computer) that can use a game program according to the present invention.
[Fig. 2] An example of a control block diagram of the portable game unit.
[Fig. 3] An example of a function block diagram of the portable game unit.
[Fig. 4] An explanation of the base running system in a baseball game (base running example 1).
[Fig. 5] An explanation of the base running system in a baseball game (base retreat example 1).
[Fig. 6] An explanation of the base running system in a baseball game (base running example 2).
[Fig. 7] An explanation of the base running system in a baseball game (base retreat example 2).
[Fig. 8] A flowchart for explaining the base running system in a baseball game.

### Explanation of the reference numbers

### Portable game unit

- 3: Liquid crystal monitor
- 3b: Touch panel type monitor
- 4: Input unit
- 50: Character display means
- 51: Moving character display means
- 52: Moving character selection means
- 53: Character movement means
- 54: Character movement display means
- 72a: Runner character
- 74b: First base character
- 74c: Second base character
- 74d: Third base character

### Best mode for carrying out the invention

### [Construction of the game device]

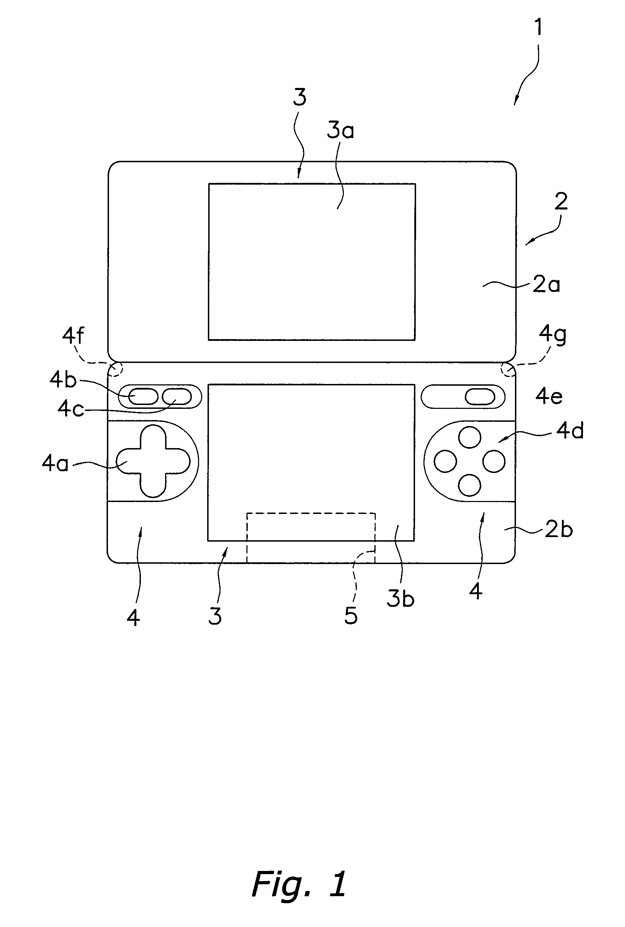

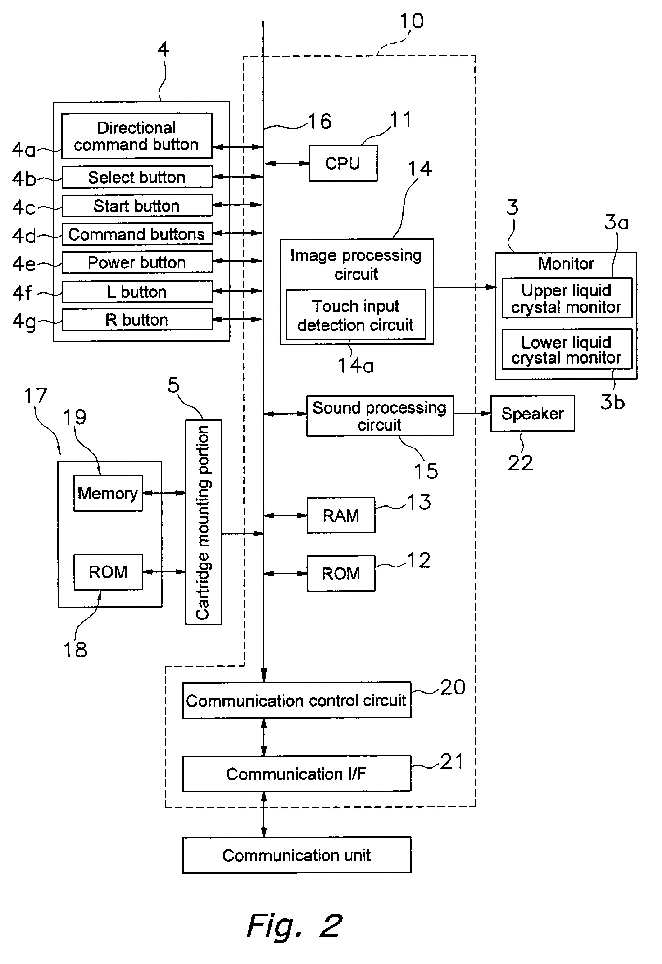

Fig. 1 is an external view of a portable game unit (an example of a computer) that can use a game program according to the present invention. In addition, Fig. 2 is one example of a control block diagram of the portable game unit.

As shown in Fig. 1, the portable game unit 1 primarily has a main case 2, a liquid crystal monitor unit 3, an input unit 4, a cartridge mounting unit 5, and a communication unit (not shown in the drawings). The main case 2 has an upper case 2a and a lower case 2b. The upper case 2a and the lower case 2b are connected to each other such that they can be opened and closed. The liquid crystal monitor unit 3 comprises an upper liquid crystal monitor 3a provided in the upper case 2a, and a lower liquid crystal monitor 3b provided in the lower case 2b. Here, for example, the upper liquid crystal monitor 3a is a non-touch panel type monitor, and the lower liquid crystal monitor 3b is a touch panel type monitor. The non-touch panel type monitor is comprised of a liquid crystal panel, and the touch panel type monitor is comprised of a liquid crystal panel and a touch panel. On the touch panel type monitor, the display surface of the liquid crystal panel and the data input surface of the touch panel are laminated together so as to be integral with each other. The input unit 4 comprises a cross-shaped directional command button 4a that is arranged on the central portion of the left side of the lower case 2b, a select button 4b and a start button 4c arranged from left to right on the upper portion of the left side of the lower case 2b, command buttons 4d that are arranged in the central portion of the right side of the lower case 2b, a power button 4e that is arranged on the upper portion of the right side of the lower case 2b, and an L button 4f and a R button 4g arranged on the left and right corners of the lower case 2b. The cartridge mounting unit 5 is provided in the lower portion of the lower case 2b. A game cartridge or the like can be mounted in the cartridge mounting unit 5. The communication unit is built into the main case 2, e.g., the lower case 2a. A local wireless network function, internet connection via wireless LAN function, or the like are provided by the communication unit. Note that a sound volume adjustment button, an earphone jack, and the like are provided in the game unit 1, but an explanation of these will be omitted.

As shown in Fig. 2, the portable game unit 1 has a control device 10 in the interior thereof. A CPU (Central Processing Unit) 11 which uses a microprocessor, a ROM (Read Only Memory) 12 as a main storage device, a RAM (Random Access Memory) 13, an image processing circuit 14, a sound processing circuit 15, and a communication control circuit 20 of the control device 10 are connected to each other via a bus 16.

The CPU 11 will interpret instructions from a game program, and will perform various types of data processing and control. The ROM 12 will store programs and the like needed for basic control of the game unit 1 (e.g., start-up control). The RAM 13 will maintain a working area for the CPU 11. The image processing circuit 14 controls the liquid crystal monitor unit 3 in response to rendering commands from the CPU 11, and displays predetermined images on at least one of the upper liquid crystal monitor 3a and the lower liquid crystal monitor 3b. In addition, a touch input detection circuit 14a is included in the image processing circuit 14. When a command means, e.g., a touch pen, a finger, or the like is brought into direct contact with the touch panel, coordinate date of the contact position will be supplied from the touch input detection circuit 14a to the CPU 11, and the contact position will be identified by the CPU 11. In addition, when the command means is brought into direct contact with the touch panel at the position of a target object displayed on the liquid crystal panel, coordinate data of the target object will be supplied from the touch input detection circuit 14a to the CPU 11, and the target object will be identified by the CPU 11. The sound processing circuit 15 will produce analog audio signals in response to sound generation commands from the CPU 11, and will output the same to a speaker 22. The communication control circuit 20 is included in the communication unit, and is employed in order to wirelessly connect the game unit 1 to another game unit or the like. The communication control circuit 20 is connected to the CPU 11 via the bus 16. In response to instructions from the CPU 11, the communication control circuit 20 will control and dispatch connection signals for connecting the game unit 1 to the internet via a local wireless network or a wireless LAN.

An external storage device 17 that is separate from the control device 11 is connected to the bus 16. For example, the external storage device 17 is a game cartridge that is removably mounted in the main case 2, e.g., the lower case 2b. A ROM 18 as a storage medium, and a memory 19 as a rewriteable user memory, are provided in the interior of the external storage device 17. A game program that causes the game unit 1 to function as a computer, and various types of data needed in the execution of the game program, are stored in advance in the ROM 18. The various types of data include various types of character image data, e.g., various types of panel image data, attribute image data, and the like. Rewriteable memory such as flash memory is used in the memory 19. Saved game data or the like will be stored in the memory 19 in response to need. Note that the storage medium of the external storage device 17 is not limited to a semiconductor memory element, and various other types of storage media may be used, such as a magnetic storage medium, an optical storage medium, a magneto-optical storage medium, or the like. Note also that an interface circuit is interposed between the bus 16 and each element, but illustration of these will be omitted here.

With the game unit 1 constructed as described above, a player can play various game genres on the liquid crystal monitor unit 3 by loading a game program stored in the ROM 18 of the external storage device 17, and executing the loaded game program with the CPU 11. In addition, by connecting the game unit 1 with another game unit with a wireless network, or connecting the game unit 1 with another game unit via a communication cable or the like, data can be exchanged with another game unit or a competition type game can be played via the communication control circuit 10.

### [Summary of various types of processes in the game device]

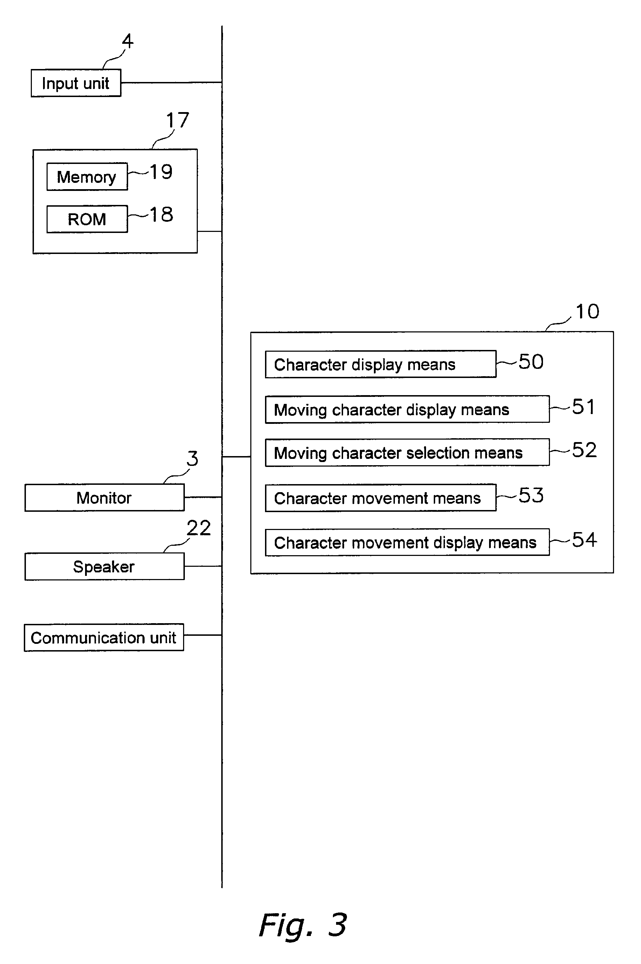

A game that can be executed in the present game unit 1 is, for example, a baseball game. Fig. 3 is a function block diagram for explaining the functions that play an essential role in the present invention.

With the present game unit 1, a plurality of characters, including a runner character, will be displayed on a touch panel type of monitor. This game device primarily comprises character display means 50, moving character display means 51, moving character selection means 52, character moving means 53, and character moving display means 54.

The character display means 50 is implemented by a function that will display a first character positioned at a first position and a second character positioned at a second position on a monitor. With the character display means 50, the first character positioned at the coordinates of a first position read out from ROM 18 and stored in the RAM 13, and the second character positioned at the coordinates of a second position read out from ROM 18 and stored in the RAM 13, will be displayed on the monitor 3, e.g., the lower monitor 3b. More particularly, the first character and the second character will be displayed on the liquid crystal panel used as a touch panel on the lower monitor 3b. Here, first character data and second character data will be supplied from the RAM 13 to the image processing circuit 14 based upon command signals from the CPU 11, and will be displayed at a first position and a second position of the liquid crystal panel by the image processing circuit 14.

The moving character display means 51 is implemented by a function that will display on the monitor a runner character that can move between the first character and the second character. The moving character display means 51 will display on the monitor 3, e.g., the lower monitor 3b, a runner character that can move between the first character and the second character. More particularly, the runner character will be displayed on the liquid crystal panel used as a touch panel on the lower monitor 3b. Here, runner character data will be read out from the ROM 18 and supplied to the RAM 13. The runner character data will be supplied from the RAM 13 to the image processing circuit 14 based upon command signals from the CPU 11, and will be displayed between the first position and the second position on the liquid crystal panel used as a touch panel by the image processing circuit 14.

The moving character selection means 52 is implemented by a function that will select the runner character when the command means is placed into contact with the runner character. With the moving character selection means 52, if the command means, e.g., a touch pen, a finger, or the like, is brought into contact with the touch panel in the position of the runner character displayed on the liquid crystal panel used as a touch panel, the coordinate data of the runner character will be supplied from the touch input detection circuit 14a to the CPU 11. In this way, the position of the runner character commanded with the command means will be identified by the CPU 11, and the runner character will be identified by the CPU 11.

The character movement means 53 is implemented by a function that will move the runner character to one of the first character and the second character in response to the number of times the command means is placed into contact with the runner character. With the character movement means 53, command signals for causing the runner character to be moved to one of the first character and the second character in response to the number of times the command means, e.g., a touch pen, a finger, or the like, is placed into contact with the position of the runner character displayed on the liquid crystal panel will be issued from the CPU 11 to the image processing circuit 14.

In addition, the character movement means 53 is implemented by a function that will reverse the direction in which the runner character moves each time the command means is placed into contact with the runner character during movement. With the character moving means 53, command signals for causing the direction in which the runner character moves to be reversed each time the command means, e.g., a touch pen, a finger, or the like, is brought into contact with the position of the runner character displayed on the liquid crystal panel will be issued from the CPU 11 to the image processing circuit 14.

For example, with the character movement means 53, command signals for causing the runner character to be moved to one of the first character and the second character when the number of times the command means, e.g., a touch pen, a finger, or the like, is placed into contact with position of the runner character displayed on the liquid crystal panel is odd will be issued from the CPU 11 to the image processing circuit 14. Then, command signals for causing the runner character to be moved to the other of the first character and the second character when the number of times the command means, e.g., a touch pen, a finger, or the like, is placed into contact with position of the runner character displayed on the liquid crystal panel is even will be issued from the CPU 11 to the image processing circuit 14.

The character movement display means 54 is implemented by a function that will display the movement state of the runner character on the monitor. With the character movement display means 54, the movement state of the runner character will be displayed on the monitor 3, e.g., the lower monitor 3b, by the image processing circuit 14. More particularly, the movement state of the runner character will be displayed on the liquid crystal panel used as the touch panel on the lower monitor 3b.

### [Summary of the baseball game]

Next, the specific content of the baseball game of the present embodiment will be explained.

This baseball game primarily comprises a batting system that issues commands with regard to batting to a batter character, a defense system that issues commands with regard to catching and throwing to a fielder character, a pitching system that issues commands with regard to pitching to a pitcher character, and a base running system that issues commands with regard to base running to a base running character. Each of these systems is realized by a game program stored in the ROM 18, for example, and is executed in the game unit 1.

A summary of the base running system that plays an essential role in the present invention will be explained below.

The base running system allows a base running operation to be performed by commanding a runner character to run to a base by means of the command means, e.g., a touch pen, a finger, or the like.

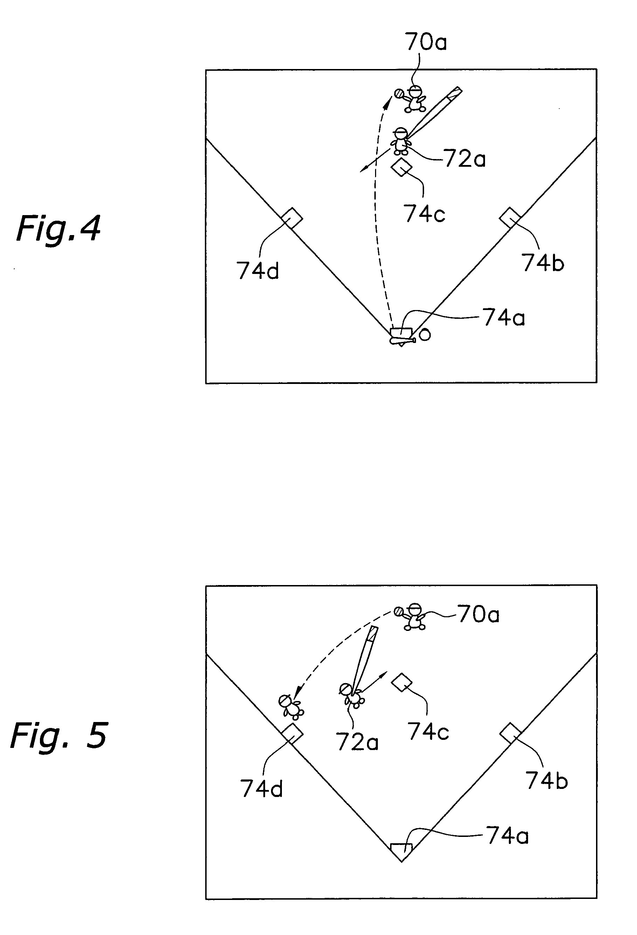

In the present baseball game, when a player operates a runner character, as shown in Fig. 4, defense characters 70, a hitter character 71, a runner character 72, a ball character 73, and each base character 74, can be primarily displayed on the lower touch panel type of monitor. Here, the defense characters 70 include, for example, a pitcher character, a catcher character, and a plurality of fielder characters.

When a runner character 72 is present on at least one of the first to third base characters, the runner character 72 will be selected, and the runner character 72 will run to the next base character, if a player places the touch pen into contact with the runner character 72. Then, when the runner character 72 is running to the next base character, the runner character 72 will run back to the previous base character if the player again places the touch pen into contact with the runner character 72. Thus, the runner character 72 will reverse the direction in which it is running each time the player places the touch pen into contact with the runner character 72.

For example, as shown in Fig. 4, if the ball character 73 hit by the batter character 71 is directly caught by the fielder character 70a in center field when the runner character 72 is on the second base character 74c, if the player places the touch pen into contact with the runner character 72a at second base at the point when the fielder character 70a in center field catches the ball character 73, the runner character 72a will be selected, and the runner character 72a will run from the second base character 74c to the third base character 74d. Then, as shown in Fig. 5, if the player again places the touch pen on the runner character 72a while the runner character 72 is moving from the second base character 74c to the third base character 74d, the runner character 72a will begin to run back to the second base character 74c. This corresponds to a state in a baseball game in which a player on second base runs toward third base during a center field fly. Then, the running player reverses course and returns to second base.

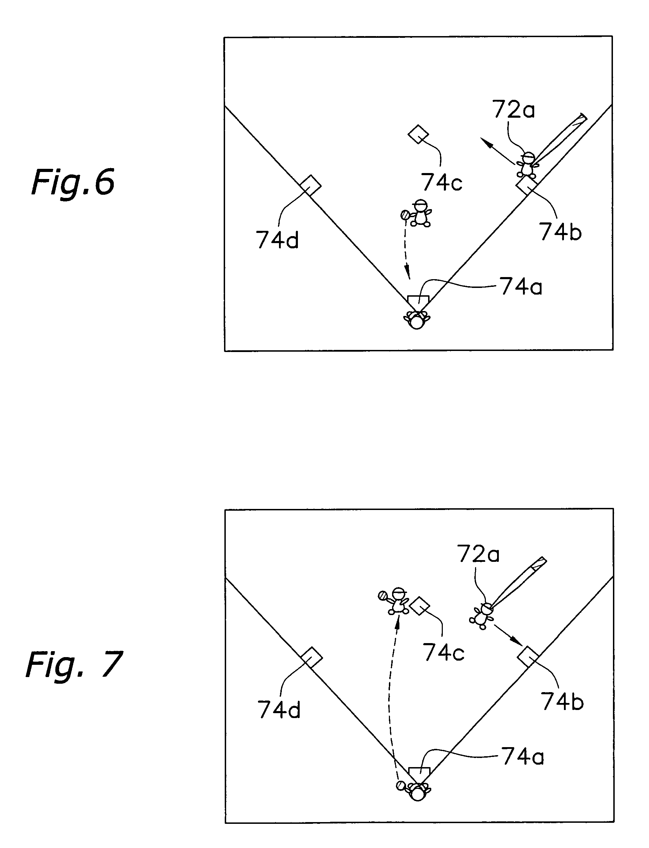

For example, as shown in Fig. 6, if the ball character 73 is dispatched from the pitcher character to the catcher character when the runner character 72a is on the first base character 74b, the runner character 72a will be selected, and the runner character 72a will run from the first base character 74b to the second base character 74c if the player places the touch pen into contact with the runner character 72a on first base. Then, as shown in Fig. 7, if the player again places the touch pen on the runner character 72a while the runner character 72a is moving from the first base character 74b to the second base character 74c, the runner character 72a will begin to run back to the first base character 74b. This corresponds to a state in a baseball game in which a player on first base steals second base. Then, the player stealing second base stops and returns to first base.

### [Each process flow during execution of the base running system]

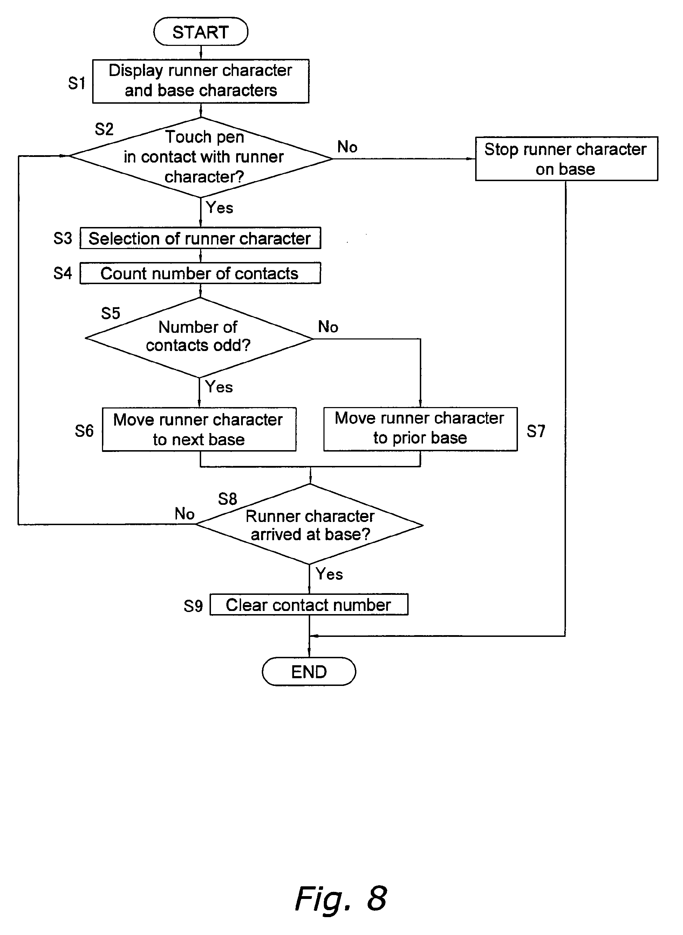

The flowchart shown in Fig. 8 will be used to explain the base running system in the baseball game of the present embodiment.

In the event that a player is to operate the runner, first, the defense characters 70, the batter character 71, the runner character 72, the ball character 73, and each base character 74, will be displayed on the lower touch panel type of monitor (S1). Then, it will be determined whether or not the touch pen has been placed into contact with the runner character 72 during play (S2). If it is determined that the touch pen has not been placed into contact with the runner character 72 (S2 is no), the runner character 72 will be maintained in a state in which it remains on base (S4). If it is determined that the touch pen has been placed into contact with the runner character 72 (S2 is yes), the runner character 72 will be selected (S3). The number of times the touch pen has been placed into contact with the runner character 72 will be counted (S4). Here, the number of times that the touch pen has been placed into contact with the runner character 72 will be incremented by ones.

Next, it will be determined whether or not the number of times the touch pen was placed into contact with the runner character 72 is odd (S5). If the number of times the touch pen was placed into contact with the runner character 72 is determined to be odd (S5 is yes), the selected runner character 72 will be moved to the next base character (S6). If the number of times the touch pen was placed into contact with the runner character 72 is determined to be even (S5 is no), the selected runner character 72 will be moved to the base character prior to movement (S6).

Next, it will be determined whether or not the runner character 72 has arrived at either of the next base character and the base character prior to movement (S8). If it is determined that the runner character 72 has not arrived at either of the next base character and the base character prior to movement (S8 is no), the processes from S2 to S7 will be re-executed. If it is determined that the runner character 72 has arrived at either of the next base character and the base character prior to movement (S8 is yes), the number of times the touch pen has been placed into contact with the runner character 72 will be cleared (S9), and the input of the next command will be awaited.

### [Other embodiments]

(a) With the aforementioned embodiment, an example was illustrated in which the portable game unit 1 was used as an example of a computer that can utilize the game program, however the game device is not limited to the aforementioned embodiment, and can also utilize in the same way a game device formed separately from a monitor, a game device for commercial use that is formed integrally with a monitor, and a personal computer, a workstation, or the like that functions as a game device by executing a game program.

(b) The present invention also includes a program and method for executing the game described above, and a computer readable storage medium on which the program is stored. Other than the cartridge, examples of recording media include computer readable flexible disks, semiconductor memory, CD-ROM, DVD, MO, ROM cassettes, and the like.

### Industrial Applicability

With the present invention, the first character positioned at the first position and the second character positioned at the second position will be displayed on the monitor, and the moving character movable between the first character and the second character will be displayed on the monitor. In this state, if the moving character is selected when the command means is placed into contact with the moving character, the moving character will move to one of the first character and the second character in response to the number of times the command means is placed into contact with the moving character. In this way, a player can move a moving character by simply placing a command means into contact with the moving character. In other words, the player can accurately and easily input commands that cause the moving character to move.

## Claims

1. A game program for causing a computer to implement a game in which a plurality of characters is displayed on a touch panel type of monitor, comprising:
a character display function that will display a first character positioned at a first position and a second character positioned at a second position on the monitor,
a moving character display function that will display on the monitor a moving character that is movable between the first character and the second character,
a moving character selection function that will select the moving character when a command means is placed into contact with the moving character, and
a character movement function that will move the moving character to one of the first character and the second character in response to the number of times the command means is placed into contact with the moving character.

2. The game program according to claim 1, wherein the character moving function will move the moving character to one of the first character and the second character when the command means is placed into contact with the moving character an odd number of times, and will move the moving character to the other of the first character and the second character when the command means is placed into contact with the moving character an even number of times.

3. The game program according to claims 1 or 2, wherein the character movement function includes a function that will reverse the direction in which the moving character moves each time the command means is placed into contact with the moving character during movement.

4. A game device capable of implementing a game in which a plurality of characters is displayed on a touch panel type of monitor, comprising:
character display means that will display a first character positioned at a first position and a second character positioned at a second position on the monitor,
moving character display means that will display on the monitor a moving character that is movable between the first character and the second character,
character selection means that will select the moving character when a command means is placed into contact with the moving character, and
character movement means that will move the moving character to one of the first character and the second character in response to the number of times the command means is placed into contact with the moving character.

5. A game method capable of implementing a game in which a plurality of characters are displayed on a touch panel type of monitor, comprising:
a character display step that will display a first character positioned at a first position and a second character positioned at a second position on the monitor,
a moving character display function that will display on the monitor a moving character that is movable between the first character and the second character,
a moving character selection step that will select the moving character when a command means is placed into contact with the moving character, and
a character movement function that will move the moving character to one of the first character and the second character in response to the number of times the command means is placed into contact with the moving character.
